# EUROPÄISCHE PATENTSCHRIFT

(11) **EP 2 734 327 B1**
(45) Veröffentlichungstag und Bekanntmachung des Hinweises auf die Patenterteilung: **18.10.2017**
(21) Anmeldenummer: 12745800.8
(22) Anmeldetag: 18.07.2012
(51) Int. Cl.: B23B 31/20, B23D 37/20, B23D 37/10, B23D 41/04

(54) **INNENRÄUMMASCHINE**
INTERNAL BROACHING MACHINE
MACHINE À BROCHER L'INTÉRIEUR

(30) Priorität: 20.07.2011 DE 202011103479 U
(43) Veröffentlichungstag der Anmeldung: 28.05.2014
(73) Patentinhaber: Gierth, Lothar, 58802 Balve (DE)
(72) Erfinder: Gierth, Lothar, 58802 Balve (DE)
(74) Vertreter: Patentanwälte Dörner & Kötter PartG mbB
(86) Internationale Anmeldenummer: PCT/EP2012/064058
(87) Internationale Veröffentlichungsnummer: WO 2013/011051

(56) Entgegenhaltungen:
- EP-B1- 1 247 605
- WO-A1-87/07548
- WO-A1-2006/058543
- DE-A1-102008 051 612
- GB-A- 2 081 627
- JP-A- 57 138 514
- US-A- 4 181 458
- US-A1- 2008 282 878

## Beschreibung

Die Erfindung betrifft eine Innenräummaschine nach dem Oberbegriff des Patentanspruchs 1.

Eine derartige Innenräummaschine ist beispielsweise aus der EP 1 247 605 B1 bekannt. Dabei sind in einem Maschinengestell ein oberer Druckschlitten und ein unterer Ziehschlitten verfahrbar angeordnet. Zwischen diesen Schlitten ist ein Maschinentisch mit Aufnahmen für das zu bearbeitende Werkstück angeordnet, wobei das den Maschinentisch durchsetzende Räumwerkzeug jeweils am Druckschlitten und am Ziehschlitten in Werkzeughaltern festsetzbar ist.

Mit derartigen Maschinen werden beispielsweise Innenbohrungen oder Nuten bearbeitet, wobei an den zu bearbeitenden Innenflächen das Räumwerkzeug entweder vorbeigeschoben oder vorbeigezogen wird. Dabei ist das Räumwerkzeug während des Einsatzes beidseitig eingespannt, wobei das Räumwerkzeug gleichzeitig mit Druck und Zug beaufschlagbar ist. Hierzu ist das Räumwerkzeug in radial spannbaren Werkzeughaltern am Druck- und am Ziehschlitten zentriert eingespannt gehalten, wobei die beiden Schlitten während der Räumbearbeitung kraftschlüssig gekoppelt sind.

Die vorgenannte Innenräummaschine hat sich in der Praxis bewährt. Insbesondere ist hier ein radiales Ausweichen des Räumwerkzeuges während der Werkstückbearbeitung vermieden. Es hat sich jedoch gezeigt, dass bei bestimmten Werkstückkonfigurationen, beispielsweise bei Werkstücken mit großer Räumfläche oder aus harten Materialien des Räumwerkzeugs innerhalb der Werkzeugzeughalter durchrutschen kann. Hierdurch können Werkstück oder auch Werkzeug in Mitleidenschaft gezogen werden.

Hier will die Erfindung Abhilfe schaffen. Der vorliegenden Erfindung liegt die Aufgabe zugrunde, eine Innenräummaschine der vorgenannten Art bereitzustellen, bei dem einen Durchrutschen des Räumwerkzeuges verhindert ist. Gemäß der Erfindung wird diese Aufgabe durch die Merkmale des Patentanspruchs 1 gelöst.

Mit der Erfindung ist eine Innenräummaschine der vorgenannten Art geschaffen, bei der ein Durchrutschen des Räumwerkzeugs in dem Werkzeughalter verhindert ist. Durch die im Einspannzustand von den Spannzangen begrenzte, sich in Richtung des Räumwerkzeugs verengende Innenkontur, die mit der Außenkontur eines Abschnitts des Schaftes des Räumwerkzeugs korrespondiert ist eine (in Zugrichtung) form- und kraftschlüssige Verbindung erzielt, wodurch ein Durchrutschen des Räumwerkzeugs verhindert ist. Durch beidseitiges Einspannen des Räumwerkzeugs in solchen Werkzeughaltern am Zieh- und Druckschlitten der Innenräummaschine ist darüber hinaus eine Einspannung des Räumwerkzeugs zwischen Zieh- und Druckschlitten ermöglicht, wodurch ein präziserer Räumprozess erzielt werden kann. Dieser Effekt ist beispielsweise von der Einspannung des Sägeblatts bei einer Laubsäge bekannt.

Dabei weist der Werkzeughalter eine Druckhülse auf, die innerhalb des Gehäuses des Spannstoffs axial verschiebbar ist und über welche die Spannzangen radial bewegbar sind. Hierdurch ist eine gleichmäßige Einspannung des Räumwerkzeugs zwischen den Spannzangen bewirkt.

Die Druckhülse ist dabei über ein in einem zwischen der Druckhülse und einem innerhalb des Gehäuses angeordneten Anschlag gebildeten Spalt angeordnetes, über einen axial verfahrbaren Schieber radial bewegbares Wirkelement mit in Radialrichtung zumindest bereichsweise zunehmenden Querschnitt verschiebbar. Hierdurch ist eine Verschiebung der Druckhülse bei gleichzeitiger Verriegelung über den axial verfahrbaren Schieber bewirkt. Dabei ist das Wirkelement durch in dem Spalt umlaufend angeordnete Kugeln gebildet.

Vorteilhaft ist die im Einspannzustand von den Spannzangen begrenzte Innenkontur kegelförmig ausgebildet, wobei der Schaft des Räumwerkzeugs einen kegelförmigen Abschnitt aufweist. Hierdurch ist ein Verkanten des Räumwerkzeugs beim Ein- bzw. Ausbringen in den bzw. aus dem Werkzeughalter vermieden.

In weiterer Ausgestaltung der Erfindung ist die mit der sich verengenden Innenkontur der Spannzangen im Einspannzustand korrespondierende Außenkontur des Schaftes des Räumwerkzeugs durch eine auf den Schaft aufgebrachte Hülse gebildet. Hierdurch ist die Verwendung genormter Räumwerkzeuge ermöglicht, deren Schaft zur Erzielung der erfindungsgemäßen form- und kraftschlüssigen Verbindung lediglich mit einer entsprechenden Hülse zu versehen ist.
In Weiterbildung der Erfindung weist der wenigstens eine Werkzeughalter eine mechanische Verriegelung zur Fixierung der Spannzangen im Einspannzustand auf. Hierdurch ist ein konstanter Kraftschluss zwischen Werkzeughalter und Räumwerkzeugschaft gewährleistet, wodurch hohe Spannkräfte über den gesamten Bearbeitungsprozess realisierbar sind, ohne dass eine dauerhafte Kraft beispielsweise durch ein hydraulisches oder pneumatisches System von außen auf die Spannzangen aufgebracht werden muss.

In Ausgestaltung der Erfindung weisen die Spannzangen des wenigstens einen Werkzeughalters eine zumindest bereichsweise konisch ausgeformte Außenkontur auf. Dabei ist die Druckhülse bevorzugt an ihrem nach außen gerichteten Ende innen konisch sich erweiternd ausgebildet. Hierdurch ist eine gleichmäßige radiale Bewegung der Spannzangen bei axialer Verschiebung der Drückhülse bewirkt.

In Weiterbildung der Erfindung ist der Spalt trapezförmig ausgebildet. Hierdurch ist einem Verklemmen des Wirkelements in dem Spalt entgegengewirkt.

In Weiterbildung der Erfindung ist der Schieber in einem Arbeitsraum angeordnet, wobei in Axialrichtung beidseitig des Schiebers Arbeitskammern gebildet sind, in die jeweils eine Fluidleitung mündet, wobei der Schieber über eine Druckänderung der Arbeitskammern verschiebbar ist. Hierdurch ist eine hydraulische oder pneumatische Betätigung der Spannzange ermöglicht. Dabei ist wesentlich, dass die Druckänderung der Arbeitskammern über das pneumatische beziehungsweise hydraulische System lediglich temporär zur Durchführung des Einspannprozesses erfolgt. Die kontinuierliche Verspannung des Räumwerkzeugs ist durch das Schieberelement bewirkt, welches das Wirkelement in Position hält. Eine durchgehende Beaufschlagung des Werkzeughalters beziehungsweise der Arbeitskammern mit Druck ist nicht erforderlich.

In weiterer Ausgestaltung der Erfindung ist an seinem den Spannzangen abgewandten Ende an dem Gehäuse ein Deckel angebracht, in dem die Spannzangen axial gehalten sind. Hierdurch ist eine einfache Montage des Werkzeughalters ermöglicht.

In weiterer Ausgestaltung der Erfindung weisen die Spannzangen innen einen Absatz zum Eingriff in eine Aussparung eines Räumwerkzeugs auf. Hierdurch ist zwischen Werkzeughalter und Räumwerkzeug ein zusätzlicher Formschluss (in Zug- und Drückrichtung) erzielbar.

In einer weiteren Ausgestaltung der Erfindung sind wenigstens zwei Räumwerkzeuge angeordnet, die jeweils von wenigstens einem Werkzeughalter aufgenommen sind, wobei die Räumzähne wenigstens eines ersten Räumwerkzeugs entgegengesetzt zu den Räumzähnen wenigstens eines zweiten Räumwerkzeugs ausgerichtet sind. Hierdurch ist ein Räumprozess in beiden Bewegungsrichtungen der Räumwerkzeuge relativ zu den Werkstücken ermöglicht.

In Weiterbildung der Erfindung ist der Maschinentisch bewegbar angeordnet. Hierdurch ist eine Bewegung der auf diesem positionierten Werkstücke relativ zu den gegebenenfalls. feststehenden, aber möglicherweise auch entgegen dem Maschinentisch bewegten Räumwerkzeugen ermöglicht.

Bevorzugt sind an dem Maschinentisch (2) wenigstens zwei Werkstückhalter (21', 21") angeordnet, welche in eine Räumposition und eine Ladeposition verfahrbar sind. Hierdurch können bei einer Maschinentischbewegung jeweils diejenigen Werkstücke, die nicht in Räumrichtung des zugeordneten Räumwerkzeugs bewegt werden, aus der Räumachse hinaus bewegt bzw. die übrigen Werkstücke in die Räumachse des zugeordneten Räumwerkzeugs hinein bewegt werden.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:

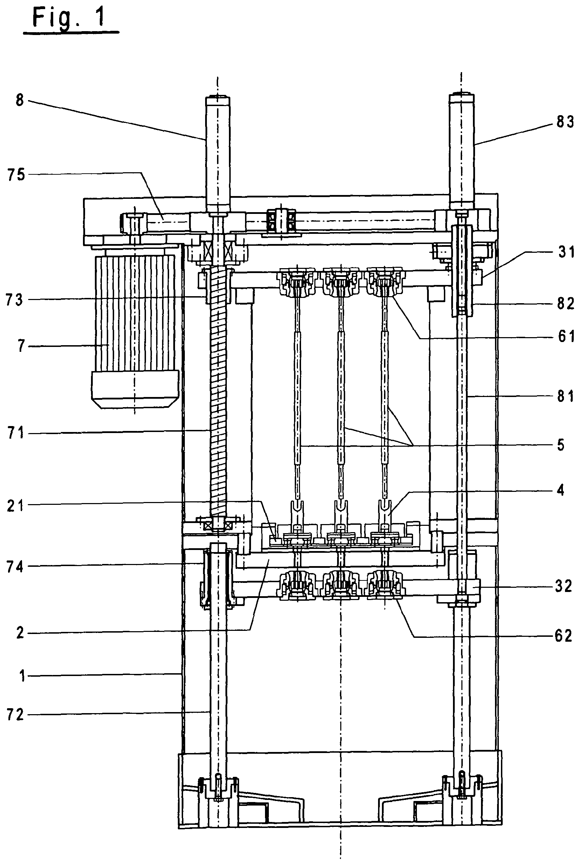

- Fig. 1: die schematische Darstellung einer Innenräummaschine mit drei parallel zueinander angeordneten Räumwerkzeugen in der Grundstellung vor Einfahren der Räumwerkzeuge in die zu bearbeitenden Werkstücke in der Seitenansicht;
- Fig. 2: die schematische Darstellung eines Werkstückshalters der Innenräummaschine aus Figur 1 im Querschnitt mit entspannten Spannzangen;
- Fig. 3: der Werkzeughalter aus Figur 2 im Einspannzustand;

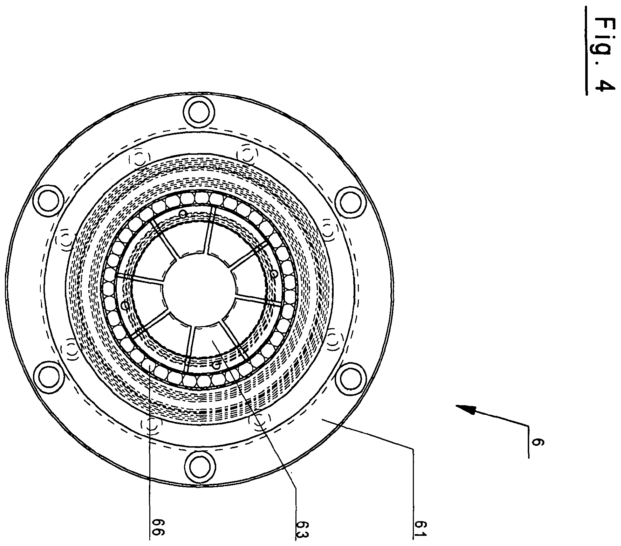

- Fig. 4: der Werkzeughalter aus Figur 2 in der Draufsicht;

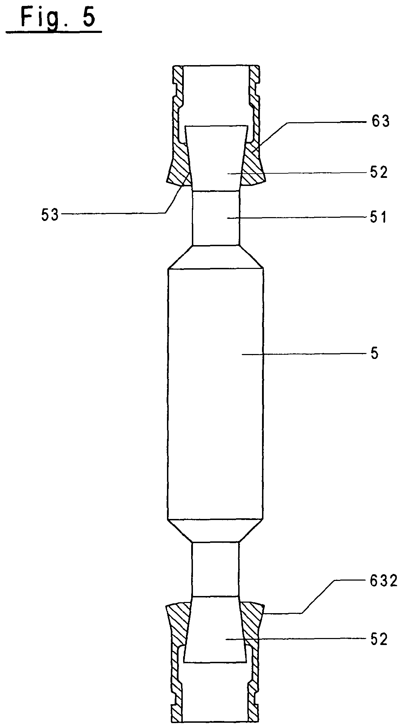

- Fig. 5: die schematische Darstellung der Einspannung eines Räumwerkzeugs und
- Fig. 6: die schematische Darstellung einer Innenräummaschine in einer weiteren Ausführungsform mit verschiebbaren Maschinentisch in sechs Verfahrenspositionen (Figuren 6a) bis 6f))

Die als Ausführungsbeispiel gewählte Innenräummaschine ist als Senkrecht-Innenräummaschine ausgeführt. Sie umfasst ein Maschinengestell 1 in dem eine Räumschlitteneinheit vertikal über einen Antriebsmotor 7 vertikal verschiebbar angetrieben ist. Die Räumschlitteneinheit besteht aus einem oberen Druckschlitten 31, der mit einer Mutter 73 als Kugelspindeltrieb geführt ist und einem unteren Ziehschlitten 32. Druckschlitten 31 und Ziehschlitten 32 sind beabstandet zueinander lösbar kraftschlüssig miteinander koppelbar ausgeführt. Der Antriebsmotor 7 ist mit der Räumschlitteneinheit über einen Zahnriemenantrieb 75 sowie Spindeln 71 verbunden.

Zwischen dem Druckschlitten 31 und dem Ziehschlitten 32 ist in dem Maschinengestell 1 ein Maschinentisch 2 angeordnet, der mit zentrierenden Aufnahmen für zu bearbeitende Werkstücke 4 versehen ist. An dem Maschinentisch 2 stützen sich die Spindeln 71 in zugeordneten Lagern ab. Fluchtend zu den Spindeln 71 sind an dem Maschinentisch 2 Führungsstangen 72 angeordnet, welche sich bodenseitig in dem Maschinengestell 1 abstützen. Auf den Führungsstangen 72 ist der Ziehschlitten 32 mit Hülsen 74 geführt.

Am Druckschlitten 31 sowie am Ziehschlitten 32 sind radial spannbare Werkzeughalter 6 zur Einspannung der Räumwerkzeuge 5 angeordnet. Die Räumwerkzeuge 5 sind dabei koaxial zu den zu bearbeitenden Werkstücken 4 beziehungsweise zu den zur Aufnahme der Werkstücke 4 am Maschinentisch 2 angeordneten Werkstückhaltern 21 ausgerichtet. Durch Verfahren des oberen Druckschlitten 31 werden die Räumwerkzeug 5 in die zu bearbeitenden Werkstücke 4 eingefahren, durchsetzen diese und greifen in Endstellung in die gegenüberliegend angeordneten Werkzeughalter 6 des unteren Ziehschlittens 32 ein.
Die Werkzeughalter 6 sind im Wesentlichen gebildet durch ein Gehäuse 61, das mit einem Deckel 62 versehen ist, der Spannzange 63 aufnimmt. Die Spannzangen 63 sind von einer Druckhülse 64 umgeben, die über mit einem Schieber 65 manipulierbare Kugeln 66 axial verschiebbar ist.

Das Gehäuse 61 ist im Wesentlichen hohlzylindrisch ausgebildet und weist an einem Ende eine Durchmesserverengung auf, wodurch ein Absatz 611 gebildet ist. Dem Absatz 611 vorgeschaltet ist in dem Gehäuse 61 ein zweiter Absatz 612 angeordnet. An seinem dem ersten Absatz 611 gegenüberliegenden Ende ist an dem Gehäuse 61 ein Deckel 62 befestigt. Der Deckel 62 ist flanschartig ausgebildet. In das Gehäuse 61 hineinragend ist an dem Deckel 62 ein erster außendurchmesserreduzierter zylindrischer Abschnitt 621 angeformt, an den sich ein zweiter, wiederum außendurchmesserreduzierter Abschnitt 622 anschließt. Der Übergang zwischen dem ersten zylindrischen Abschnitt 621 und zweiten zylindrischen Abschnitt 622 ist als Fase 623 ausgebildet. In dem ersten zylindrischen Abschnitt 621 ist innen eine Aufnahme 624 für die Spannzangen 63 angeformt.

Die Spannzangen 63 sind ringförmig an einem Spannring 630 angeordnet. Die Spannzangen 63 sind derart ausgebildet, dass sie im Einspannzustand eine kegelförmige, nach außen in Richtung des einzuspannenden Räumwerkzeugs 5 sich verengende Innenkontur 632 begrenzen. Im Ausführungsbeispiel weist die kegelförmige Innenkontur einen Kegelwinkel von 3 Grad auf. Außen weisen die Spannzangen eine sich kegelartig erweiternde Außenkontur auf, wodurch ein umlaufender konischer Abschnitt 631 gebildet ist.

Die in den Werkzeughalter 6 eingespannten Räumwerkzeuge 5 weisen an ihren endseitigen Schäften 51 jeweils einen sich endseitig kegelförmigen erweiternden Abschnitt 52 auf, der mit der kegelförmigen durch die Spannzangen 63 in Einspannzustand begrenzten kegelförmigen Innenkontur 632 korrespondiert. Im Ausführungsbeispiel sind die Räumwerkzeuge 5 standardisierte Räumwerkzeuge mit zylindrischem Schaft 51, wobei der kegelförmige Abschnitt 52 jeweils durch eine auf den Schaft 51 aufgeschobene und mit den Schaft 51 verschweißte kegelförmige Hülse 53 gebildet ist. Alternativ kann die Hülse 53 auch mit dem Schaft 51 verschraubt bzw. auf diesen aufgeschraubt sein. Es ist auch möglich, an Stelle einer zusätzlichen Hülse einen konusförmigen Abschnitt in den Schaft 51 eines standardisierten Räumwerkzeugs 5 einzuschleifen.

Die Druckhülse 64 ist im Wesentlichen hohlzylindrisch ausgebildet. An ihrem das Gehäuse 61 durchdringenden äußeren Ende ist die Druckhülse 64 mit einem Innenkonus 641 versehen. Aus seinem dem Innenkonus 641 gegenüberliegenden Ende weist die Druckhülse 64 einen durchmessererweiterten Abschnitt 642 auf, durch den ein Absatz 643 gebildet ist. Auf ihrer dem Absatz 643 gegenüberliegenden Seite ist an der Druckhülse 64 weiterhin umlaufend ein Flansch 644 angeformt, der mit einer Nut 645 zur Aufnahme einer Ringdichtung versehen ist. Die Druckhülse 64 umschließt mit ihrem äußeren Ende die Spannzangen 63, welche an ihrem Ende eine konisch ausgeformte Außenkontur aufweisen, die mit dem Innenkonus 641 der Druckhülse 64 korrespondiert. Mit ihrem durchmessererweiterten Abschnitt 642 ist die Druckhülse 64 auf den zweiten zylindrischen Abschnitt 622 des Deckels 62 aufgeschoben. Dabei ist die Druckhülse 64 an ihrem den Deckel 62 zugewandten Ende mit einer Fase 646 versehen, welche gemeinsam mit dem zweiten zylindrischen Abschnitt 622 und dessen Fase 623 einen trapezförmigen umlaufenden Spalt 647 begrenzt.

Der Schieber 65 ist im Wesentlichen holzylindrisch ausgebildet. An seinem der Druckhülse 64 zugewandten Ende ist in dem Schieber 65 ein Innenkonus 651 angeformt. Der Schieber 65 ist in einem ringförmigen Arbeitsraum 613 angeordnet, der durch die Innenwandung des Gehäuses 61, den Deckel 62 sowie den Schieber 65 begrenzt ist und in dem der Schieber 65 verschiebbar gelagert ist. In dem trapezförmigen Spalt 647 sind umlaufend Kugeln 6 angeordnet, welche durch axiale Bewegung des Schiebers 65 innerhalb des Arbeitsraums 613 in den Spalt 647 einpressbar sind, wodurch der Schieber 65 entlang dem zweiten zylindrischen Abschnitt 622 des Deckels 62 verschiebbar ist. Der Innenkonus 641 des Schiebers 65 bewirkt dabei ein kontinuierliches Eindrücken der Kugeln 66 in den Spalt 647. Beidseitig des Schiebers 65 sind durch diesen innerhalb des Arbeitsraums 613 Arbeitskammern 614 begrenzt, in die - nicht dargestellte - Druckluftleitungen münden, durch die der Schieber 65 innerhalb des Arbeitsraums 613 bewegbar ist.

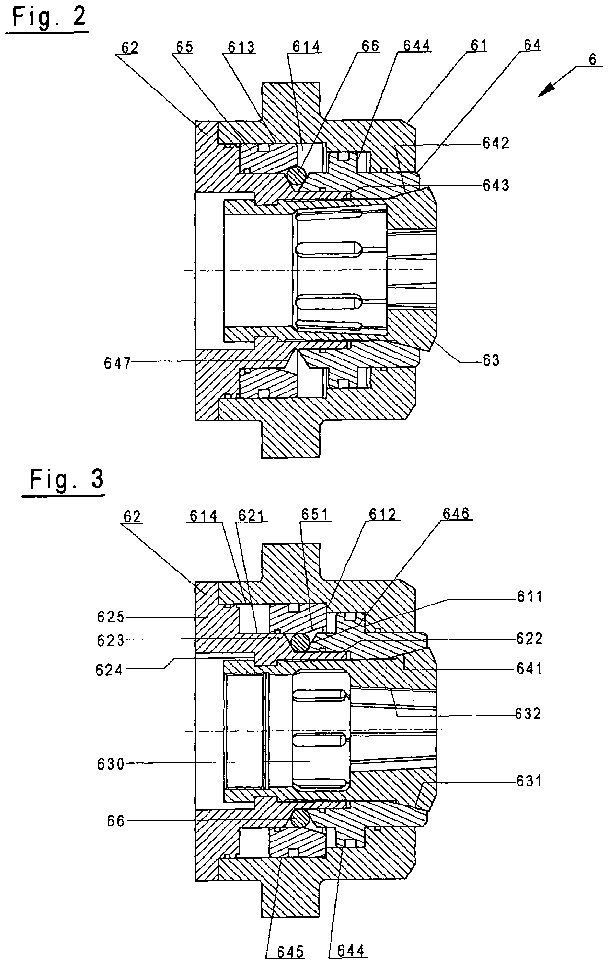

In Figur 2 ist der Werkzeughalter 6 in entspanntem Zustand dargestellt. Der Schieber 65 liegt an dem durch den ersten zylindrischen Abschnitt 621 des Deckels 62 gebildeten Absatz 625 an. Die Druckhülse 64 wird eingezogen, wodurch der Spalt 647 schmal ausgebildet ist. Die Kugeln 66 liegen etwa hälftig in dem Spalt 647 sowie an dem Innenkonus 651 des Schiebers 65 an. Wird nun in die deckelseitige Arbeitskammer 614 Druckluft eingebracht, so wird der Schieber 65 in Richtung der Druckhülse 64 bewegt, wodurch die Kugeln 66 über den Innenkonus 651 des Schiebers 65 in den Spalt 647 gepresst werden. Hierdurch wird die Druckhülse 64 nach außen bewegt, wobei der Innenkonus 641 über den konischen Abschnitt 631 der Spannzangen 63 geschoben wird, wodurch die Spannzangen 63 radial nach innen gedrückt werden. Dabei legen sich die Spannzangen 63 mit ihrer sich konisch ausbildenden Innenkontur 632 an den kegelförmigen Abschnitt 52 des Räumwerkzeugs 5 an, wodurch eine kraft- und (in Zugrichtung) formschlüssige Verbindung erzielt wird.

In Figur 3 ist der Schieber 65 in Endstellung an den zweiten Absatz 612 des Gehäuses 61 verfahren. Die Kugeln 66 befinden sich jenseits des Innenkonus 651 des Schiebers 65 und werden durch die zylindrische Innenkontur des Schiebers 65 in Position gehalten, wodurch die Druckhülse 64 im Einspannzustand der Spannzangen 63 verriegelt ist.

Nach entsprechender Einspannung der Räumwerkzeuge 5 in den so ausgeführten Werkzeughaltern 6 ist der obere Druckschlitten 31 mit dem unteren Ziehschlitten 32 über die Elemente des Hilfsantriebs 8 kraftschlüssig gekoppelt. Dabei ist ein mit dem oberen Druckschlitten 31 fest verbundener Druckluftzylinder 82 mit aufgesetzten Druckluftspeicher 83 angeordnet. Der zweiteilige Kolben, dessen Unterteil 81 fest mit dem unteren Ziehschlitten 32 verbunden ist, ist im Luftzylinder 32 verschiebbar angetrieben. Beim Verfahren des oberen Druckschlittens 31 nach unten wird daher auch der untere Ziehschlitten 32 nach unten verfahren, wodurch die eingespannt gehaltenen Räumwerkzeuge 5 ebenfalls nach unten verfahren werden, so dass durch diese Schlitteneinheit, bestehend aus oberem Druckschlitten 31 und unterem Ziehschlitten 32 sowohl eine Druck- als auch eine Zugbeanspruchung der Räumwerkzeuge 5 erfolgt.

Nach erfolgtem Räumprozess werden die Spannzangen 63 der am oberen Ziehschlitten 31 angeordneten Werkzeughalter 6, wie zuvor beschrieben, durch Verschieben des Schiebers 65 entspannt, wodurch die Räumwerkzeuge 5 freigegeben werden. Danach werden die Räumwerkzeuge 5 durch weiteres Verfahren des Ziehschlittens 32 nach unten über den Hilfsantrieb 8 aus den bearbeiteten Werkstücken 4 herausgezogen, so dass diese entnommen werden können.

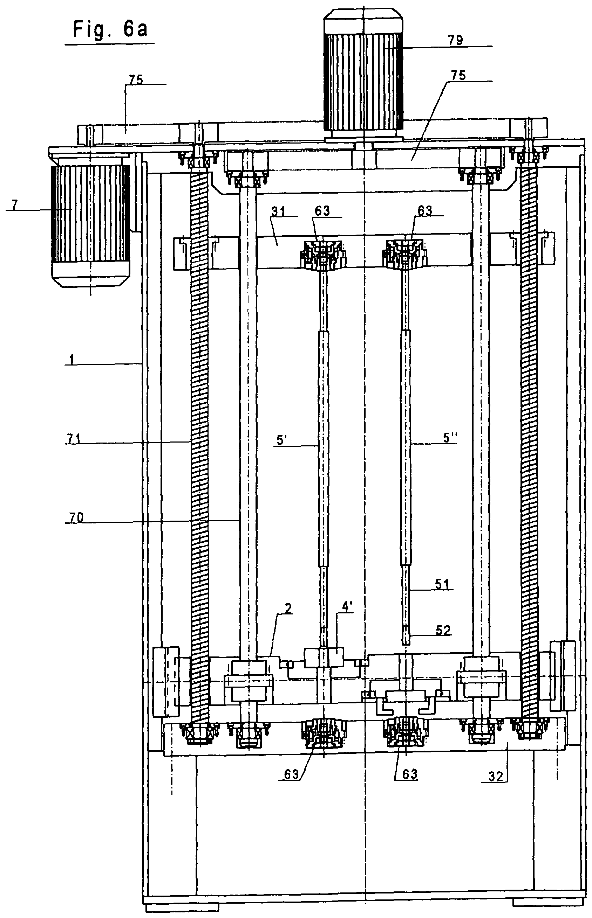

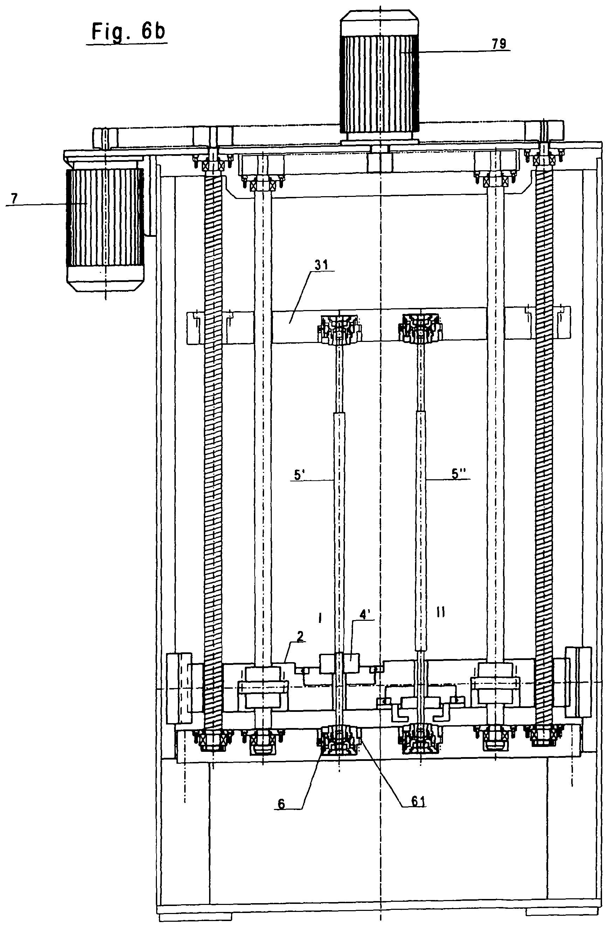

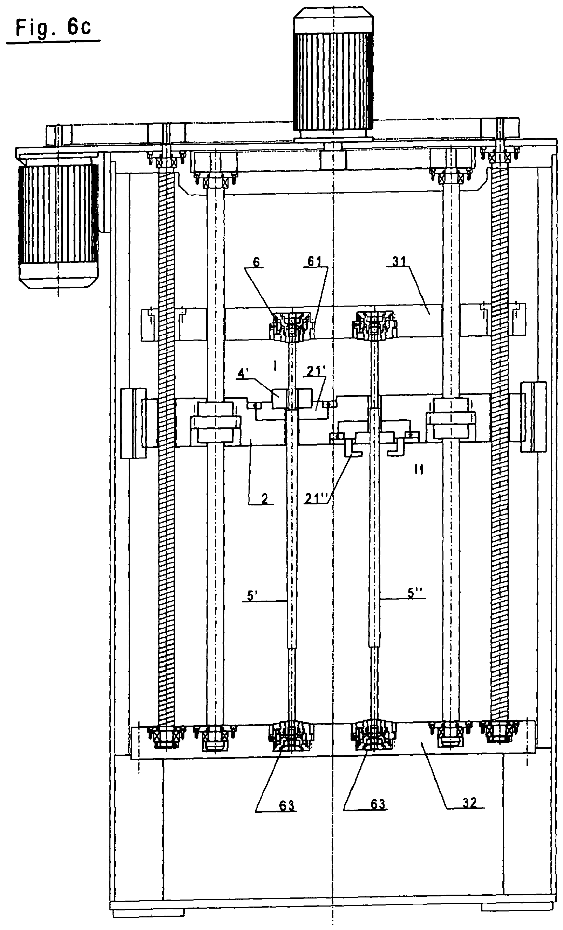

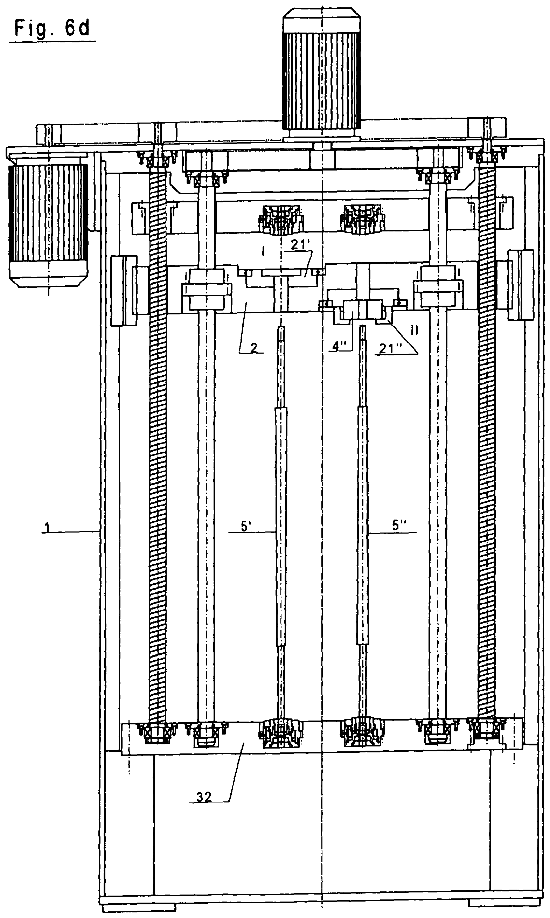

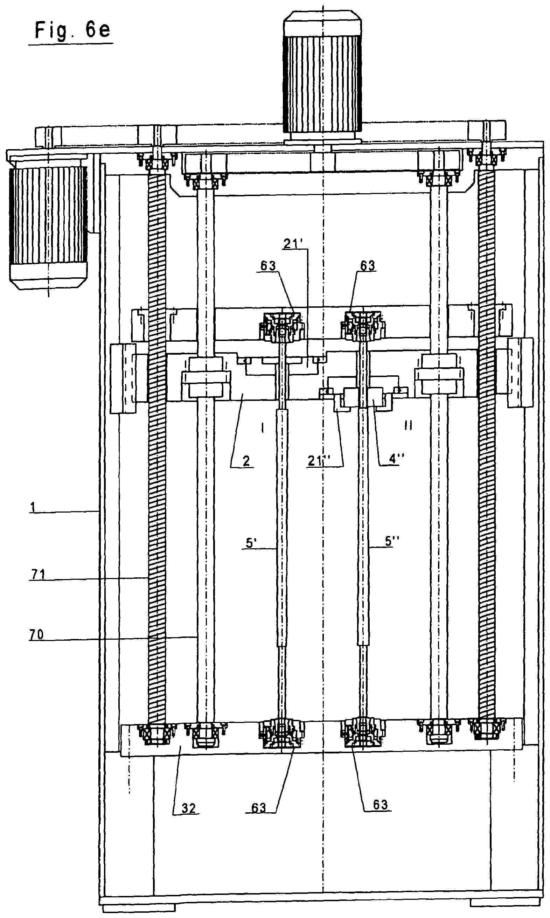

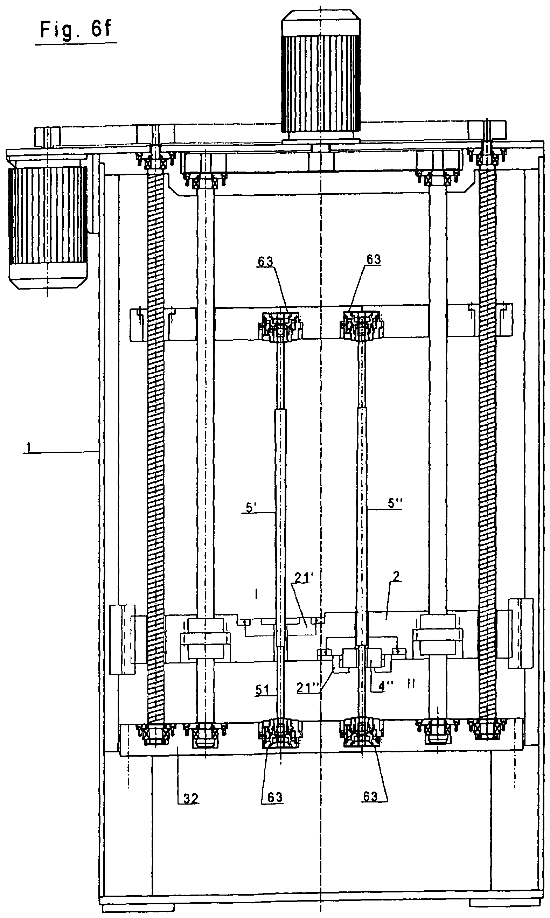

In den Figuren 6 a) bis 6 f) ist eine Innenräummaschine in einer weiteren Ausführungsform gezeigt. Die Innenräummaschine weist einen über ein Gewindespindeln 70 verschiebbaren Maschinentisch 2 auf. Die Gewindespindeln 70 sind über einen separaten Antrieb 79 antreibbar. An entgegengesetzten Seiten des Maschinentisches 2 sind an diesem zwei mit Werkstückhaltern 21', 21" versehene Spannstationen I, II angeordnet. Die Spannstationen I, II sind derart ausgebildet, dass sie in eine Lade- und eine Räumposition verfahrbar sind. Befindet sich eine Spannstation I, II in Räumposition, so liegt das in dieser Spannstation I, II angeordnete Werkstück 4', 4" zur Bearbeitung in der Räumachse des zugeordneten Räumwerkzeugs, in der Ladeposition außerhalb des Wirkbereichs des Räumwerkzeugs. Die Verfahrensschritte eines Arbeitszyklus der Innenräummaschine sind in sechs Abbildungen dargestellt und werden nachfolgend beschrieben:
Figur 6 a) zeigt die Grundposition der Innenräummaschine. In dieser Grundposition sind zwei Räumwerkzeuge 5', 5" in dem Druckschlitten 31 gespannt und befinden sich in der höchsten Position, so dass ein Werkstückwechsel erfolgen kann. Der Druckschlitten 31 ist über als Trapezgewindespindel ausgeführte Spindeln 71 vertikal verfahrbar. Das Räumwerkzeug 5' in der Station I ist mit den Räumzähnen nach unten weisend und das Räumwerkzeug 5" in der Station II mit den Räumzähnen nach oben weisend eingespannt. Dadurch kann das Werkstück 4' in der Station I durch das Räumwerkzeug 5' beim Aufwärtshub und das Werkstück 4" in der Station II beim Abwärtshub geräumt werden. Die Werkstückhalter 21', 21" der Spannstationen I und II befinden sich in der Ladeposition und werden in dieser Position beladen. Die Spannstation I fährt anschließend in die Räumposition

Figur 6 b): Beide Räumwerkzeuge 5', 5" sind mittels des Druckschlittens 31 in die unteren Spannzangen 63 der Werkzeughalter 6 gefahren. Das Räumwerkzeug 5' der Spannstation I befindet sich in dieser Position unmittelbar über dem Werkstück 4'. Die Räumwerkzeuge 5', 5" sind am Schaft 51 und kegelförmigen Abschnitt 52 fest eingespannt und werden durch eine leichte kontrollierte Aufwärtsbewegung des Druckschlittens 31 vorgespannt. Das Räumen des Werkstücks 4' beginnt, indem der Maschinentisch 2 nach oben fährt. Das Werkstück 4" in der Spannstation II verbleibt in der Ladeposition.

Figur 6 c): Das Räumwerkzeug 5' ist durch das in dem Werkstückhalter 21' der Spannstation I eingespannte Werkstück 4' gefahren und hat dieses geräumt.

Figur 6 d): Nach dem Räumen lösen die beiden Spannzangen 63 in dem Druckschlitten 31 und geben die Räumwerkzeuge 5', 5" frei. Der Druckschlitten 31 und der Maschinentisch 2 fahren in die oberste Stellung. Das geräumte Werkstück 4' in dem Werkstückhalter 21' fährt mit der Spannstation I in die Ladeposition. Das Werk^stück 4" in dem Werkstückhalter 21" fährt mit der Spannstation II in die Räumposition.

Figur 6 e): Der Maschinentisch 2 und der Druckschlitten 31 fahren zurück in die Werkzeugübernahmeposition. Die Räumwerkzeuge 5', 5" werden am Schaft 51 bzw. am Endstück fest eingespannt und durch eine leichte kontrollierte Aufwärtsbewegung des Druckschlittens 31 vorgespannt. Während des Rückhubes wird das Werkstück 4" in der Spannstation II geräumt.

Figur 6 f): Wenn der letzte Räumzahn das Werkstück 4" verlassen hat, öffnen die unteren Spannzangen 63 und geben die Räumwerkzeuge 5', 5" frei. Der Druckschlitten 31 und der Maschinentisch 2 fahren zurück in die Ausgangsposition. Die Spannstation II fährt in die Ladeposition. Die geräumten Werkstücke 4', 4" werden entnommen. Neue Werkstücke 4 werden eingelegt. Anschließend beginnt ein weiterer Arbeitszyklus u.s.w.

## Patentansprüche

1. Innenräummaschine, umfassend ein Maschinengestell, in dem ein Maschinentisch mit wenigstens einer Aufnahme für wenigstens ein Werkstück angeordnet ist, wobei ein oberer Druckschlitten und ein unterer Ziehschlitten verfahrbar angeordnet sind, welche jeweils einen Werkzeughalter aufweisen, wobei wenigstens ein Werkzeughalter in Form eines Spannzangen aufweisenden Spannstocks zur radialen Einspannung eines Räumwerkzeugs während des Räumens ist, **dadurch gekennzeichnet, dass** die Spannzangen (63) des wenigstens einen Werkzeughalters (6) im Einspannzustand eine in Richtung des Räumwerkzeugs (5) sich verengende Innenkontur (632) begrenzen, die mit der Außenkontur eines Abschnitts (52) des Schaftes (51) des Räumwerkzeugs (5) korrespondiert, wobei der Werkzeughalter (6) eine Druckhülse (64) aufweist, die innerhalb des Gehäuses (61) des Werkzeughalters (6) axial verschiebbar ist und über welche die Spannzangen (63) radial bewegbar sind, welche Druckhülse (64) über ein in einem zwischen der Druckhülse (64) und einem innerhalb des Gehäuses (61) angeordneten Anschlag gebildeten Spalt (647) angeordnetes, über einen axial verfahrbaren Schieber (65) radial bewegbares Wirkelement mit in Radialrichtung zumindest bereichsweise zunehmendem Querschnitt verschiebbar ist, wobei das Wirkelement durch in dem Spalt (647) angeordnete Kugeln (66) gebildet ist.

2. Innenräummaschine nach Anspruch 1, **dadurch gekennzeichnet, dass** die im Einspannzustand von des Spannzangen (63) begrenzte Innenkontur (632) kegelförmig ausgebildet ist, wobei der Schaft (51) des Räumwerkzeugs (5) einen kegelförmigen Abschnitt (52) aufweist.

3. Innenräummaschine nach Anspruch 1 oder 2, **dadurch gekennzeichnet, dass** die mit der sich verengenden Innenkontur (632) der Spannzangen (63) im Einspannzustand korrespondierende Außenkontur des Schaftes (51) des Räumwerkzeugs (5) durch eine auf den Schaft (51) angeordnete Hülse (53) gebildet ist.

4. Innenräummaschine nach einem der Ansprüche 1 bis 3, **dadurch gekennzeichnet, dass** der wenigstens eine Werkzeughalter (6) eine mechanische Verriegelung zur Fixierung der Spannzangen (63) im Einspannzustand aufweist.

5. Innenräummaschine nach einem der vorgenannten Ansprüche, **dadurch gekennzeichnet, dass** die Spannzangen (63) des wenigstens einen Werkzeughalters (6) eine zumindest bereichsweise konisch ausgeformte Außenkontur (631) aufweist.

6. Innenräummaschine nach einem der vorgenannten Ansprüche, **dadurch gekennzeichnet, dass** die Druckhülse (64) an ihrem nach außen gerichteten Ende innen konisch sich erweiternd ausgebildet ist.

7. Innenräummaschine nach einem der vorgenannten Ansprüche, **dadurch gekennzeichnet, dass** der Spalt (647) trapezförmig ausgebildet ist.

8. Innenräummaschine nach einem der vorgenannten Ansprüche, **dadurch gekennzeichnet, dass** der Schieber (65) in einem Arbeitsraum (613) angeordnet ist, wobei in Axialrichtung beidseitig des Schiebers (65) Arbeitskammern (614) gebildet sind, in die jeweils eine Fluidleitung mündet, wobei der Schieber (65) über eine Druckänderung der Arbeitskammern (614) verschiebbar ist.

9. Innenräummaschine nach Anspruch 8, **dadurch gekennzeichnet, dass** die Fluidleitungen Pneumatikleitungen sind.

10. Innenräummaschine nach einem der vorgenannten Ansprüche, **dadurch gekennzeichnet, dass** an seinem den Spannzangen (63) abgewandten Ende an dem Gehäuse (61) ein Deckel (62) angebracht ist, in dem die Spannzangen (63) axial gehalten sind.

11. Innenräummaschine nach einem der vorgenannten Ansprüche, **dadurch gekennzeichnet, dass** die Spannzangen (63) innen einen Absatz zum Eingriff in eine Aussparung eines Räumwerkzeugs (5) aufweisen.

12. Innenräummaschine nach einem der vorgenannten Ansprüche, **dadurch gekennzeichnet, dass** wenigstens zwei Räumwerkzeuge (5', 5") angeordnet sind, die jeweils von wenigstens einem Werkzeughalter (6, 6") aufgenommen sind, wobei die Räumzähne wenigstens eines ersten Räumwerkzeugs (5') entgegengesetzt zu den Räumzähnen wenigstens eines zweiten Räumwerkzeugs (5") ausgerichtet sind.

13. Innenräummaschine nach einem der vorgenannten Ansprüche, **dadurch gekennzeichnet, dass** der Maschinentisch (2) bewegbar angeordnet ist.

14. Innenräummaschine nach Anspruch 13, **dadurch gekennzeichnet, dass** an dem Maschinentisch (2) wenigstens zwei Werkstückhalter (21', 21 ") angeordnet sind, welche in eine Räumposition und eine Ladeposition verfahrbar ist.

## Claims

1. Internal broaching machine comprising a machine frame in which a machine table with at least one seat for at least one workpiece is arranged, where an upper push carriage and a lower draw carriage are arranged to travel, each of which is provided with a tool holder, where at least one tool holder is in the form of a clamping vice with a collet chuck for clamping a broaching tool radially during the broaching process, **characterised in that** the collet chucks (63) of the at least one tool holder (6) delimit, in the clamped state, an inner contour (632) convergent in the direction of the broaching tool (5) which corresponds to the outer contour of a section (52) of the shaft (51) of the broaching tool (5), where the tool holder (6) has a pressure sleeve (64) which can be moved axially within the housing (61) of the tool holder (6) and by means of which the collet chucks (63) can be moved radially, which pressure sleeve (64) can be moved by an actuating element, moved radially by an axially moving slide (65), and having a cross section increasing at least partially in the radial direction, and which is arranged in a gap (647) formed between the pressure sleeve (64) and a stop element arranged within the housing (61), where the actuating element is formed by balls (66) arranged in the gap (647).

2. Internal broaching machine in accordance with claim 1, **characterised in that** the inner contour (632) delimited in the clamped state by the collet chucks (63) is cone-shaped, where the shaft (51) of the broaching tool (5) has a cone-shaped section (52).

3. Internal broaching machine in accordance with claim 1 or claim 2, **characterised in that** the outer contour of the shaft (51) of the broaching tool (5) corresponding to the convergent inner contour (632) of the collet chucks (63) in the clamped state is formed by a sleeve (53) arranged on the shaft (51).

4. Internal broaching machine in accordance with any of the claims 1 to 3, **characterised in that** the at least one tool holder (6) has a mechanical locking device for fixing the collet chucks (63) in position in the clamped state.

5. Internal broaching machine in accordance with any of the preceding claims, **characterised in that** the collet chucks (63) of the at least one tool holder (6) have an outer contour (631) which is, at least in parts, conically shaped.

6. Internal broaching machine in accordance with any of the preceding claims, **characterised in that** the pressure sleeve (64) widens conically on the inside of its outwardly pointing end.

7. Internal broaching machine in accordance with any of the preceding claims, **characterised in that** the gap (647) is trapezoid in shape.

8. Internal broaching machine in accordance with any of the preceding claims, **characterised in that** the slide (65) is located in a working space (613) where on either side of the slide (65) in the axial direction working compartments (614) are formed, into each of which a fluid pipe leads, where the slide (65) can be moved by means of a change in pressure of the working compartments (614).

9. Internal broaching machine in accordance with claim 8, **characterised in that** the fluid pipes are pneumatic pipes.

10. Internal broaching machine in accordance with any of the preceding claims, **characterised in that** a cover (62) is fitted to the housing (61) at its end facing away from the collet chucks (63), in which the collet chucks (63) are held axially.

11. Internal broaching machine in accordance with any of the preceding claims, **characterised in that** the collet chucks (63) have a shoulder on the inside for engaging a recess in a broaching tool (5).

12. Internal broaching machine in accordance with any of the preceding claims, **characterised in that** at least two broaching tools (5', 5") are arranged, each of which is held by at least one tool holder (6', 6"), where the broaching teeth of at least one first broaching tool (5') are aligned in the opposite direction to the teeth of at least one second broaching tool (5").

13. Internal broaching machine in accordance with any of the preceding claims, **characterised in that** the machine table (2) is arranged movably.

14. Internal broaching machine in accordance with claim 13, **characterised in that** at least two workpiece holders (21', 21 ") are arranged on the machine table which workpiece holders can be moved into a broaching position and a loading position.

## Revendications

1. Machine à brocher l'intérieur, comprenant un châssis machine dans lequel est disposé un plateau machine comprenant un ou plusieurs logement(s) pour au moins une pièce, sachant qu'un chariot poussoir supérieur et un chariot tracteur inférieur sont disposés de façon à permettre leur translation, et qu'ils présentent chacun un porte-outil, sachant qu'au moins un porte-outil en forme d'étau présentant des pinces de serrage est destiné à serrer radialement un outil de brochage pendant l'opération de brochage, **caractérisée en ce que** les pinces de serrage (63) de l'un ou plusieurs porte-outil(s) (6) limitent un contour intérieur (632) allant en se rétrécissant en direction de l'outil à brocher (5), à l'état serré, contour intérieur qui épouse le contour extérieur d'un segment (52) de la queue (51) de l'outil à brocher (5), sachant que le porte-outil (6) présente une douille poussoir (64) déplaçable axialement à l'intérieur du boîtier (61) du porte-outil (6), et via laquelle les pinces de serrage (63) sont déplaçables sur le plan radial, laquelle douille poussoir (64) étant déplaçable via un élément d'actionnement déplaçable radialement via un tiroir (65) déplaçable par translation axiale, élément d'actionnement qui est agencé à l'intérieur d'un interstice (647) formé entre la douille poussoir (64) et une butée disposée à l'intérieur du boîtier (61), et qui présente une section allant en augmentant au moins localement dans le sens radial, sachant que l'élément d'actionnement est formé par des billes (66) disposées dans l'interstice (647).

2. Machine à brocher l'intérieur selon la revendication 1, **caractérisée en ce que** le contour intérieur (632) limité à l'état serré par les pinces de serrage (63) est de forme conique, sachant que la queue (51) de l'outil à brocher (5) présente un segment (52) de forme conique.

3. Machine à brocher l'intérieur selon la revendication 1 ou 2, **caractérisée en ce que** le contour extérieur de la queue (51) de l'outil à brocher (5), épousant à l'état serré le contour intérieur (632) allant se rétrécissant des pinces de serrage (63), est formé par une douille (53) disposée sur la queue (51).

4. Machine à brocher l'intérieur selon la revendication 1 à 3, **caractérisée en ce qu'**au moins un porte-outil (6) présente un verrouillage mécanique pour immobiliser les pinces de serrage (63) à l'état serré.

5. Machine à brocher l'intérieur selon l'une des revendications précédentes, **caractérisée en ce que** les pinces de serrage (63) de l'un ou plusieurs porte-outil(s) (6) présentent un contour extérieur (631) au moins localement de forme conique.

6. Machine à brocher l'intérieur selon l'une des revendications précédentes, **caractérisée en ce que** la douille poussoir (64) est configurée allant en s'évasant de façon conique à l'intérieur au niveau de son extrémité orientée vers l'extérieur.

7. Machine à brocher l'intérieur selon l'une des revendications précédentes, **caractérisée en ce que** l'interstice (647) est de forme trapézoïdale.

8. Machine à brocher l'intérieur selon l'une des revendications précédentes, **caractérisée en ce que** le tiroir (65) est disposé dans un compartiment de travail (613), sachant que dans le sens axial des deux côtés du tiroir (65) sont formés des compartiments de travail (614) dans chacun desquels aboutit une conduite de fluide, sachant que le tiroir (65) est déplaçable en modifiant la pression des compartiments de travail (614).

9. Machine à brocher l'intérieur selon la revendication 8, **caractérisée en ce que** les conduites de fluide sont des conduites pneumatiques.

10. Machine à brocher l'intérieur selon l'une des revendications précédentes, **caractérisée en ce qu'**en son extrémité ne regardant pas les pinces de serrage (63) un couvercle (62) est fixé sur le boîtier (61), couvercle dans lequel les pinces de serrage (63) sont maintenues axialement.

11. Machine à brocher l'intérieur selon l'une des revendications précédentes, **caractérisée en ce que** les pinces de serrage (63) présentent à l'intérieur un épaulement pour engrener dans un évidement d'un outil à brocher (5).

12. Machine à brocher l'intérieur selon l'une des revendications précédentes, **caractérisée en ce que** sont disposés au moins deux outils à brocher (5', 5") logés chacun dans au moins un porte-outil (6', 6"), sachant que les dents à brocher d'au moins un premier outil à brocher (5') sont orientées en direction opposée à celle des dents à brocher d'au moins un second outil à brocher (5").

13. Machine à brocher l'intérieur selon l'une des revendications précédentes, **caractérisée en ce que** le plateau machine (2) est disposé déplaçable.

14. Machine à brocher selon la revendication 13, **caractérisée en ce que** contre le plateau machine (2) sont disposés au moins deux porte-outils (21', 21 ") déplaçables par translation vers une position de brochage et une position de chargement.
